# EUROPEAN PATENT SPECIFICATION

(11) **EP 0 707 991 B1**
(45) Date of publication and mention of the grant of the patent: **22.04.1998**
(21) Application number: 95115107.5
(22) Date of filing: 26.09.1995
(51) Int. Cl.: B60H 1/24, B60N 3/08, B60N 2/44

(54) **An air inlet integral with an ash-tray for the back seats of a motorcar**
Lufteinlass mit integriertem Ascher für eine Hintersitzanlage eines Kraftfahrzeuges
Entrée d'air avec cendrier intégré pour les sièges arrières d'un véhicule automobile

(30) Priority: 21.10.1994 IT TO940208 U
(43) Date of publication of application: 24.04.1996
(73) Proprietor: FIAT AUTO S.p.A., 10135 Torino (IT)
(72) Inventor: Rana, Avtar Singh, I-10043 Orbassano (TO) (IT); Rolando, Sandro, I-10098 Rivoli (TO) (IT)
(74) Representative: Di Francesco, Gianni

(56) References cited:
- DE-A- 2 426 947
- DE-U- 9 210 884
- ATZ - AUTOMOBILTECHNISCHE ZEITSCHRIFT, vol. 90, no. 2, February 1988 STUTTGART, DE, pages 47-56, F.W. LOHR 'DER NEUE OPEL SENATOR'

## Description

The present invention relates to an air inlet which is integral with an ash-tray for the back seats of a motorcar. The air inlet is located at the back end of the structure covering the tunnel along the middle of the car. The air inlet is easily accessible and visible for both passengers seated to the left and the right.

In order to prevent the air flux coming out of the air inlet from being directed on the ash-tray, which would render it useless for holding light bodies such as cigarette ash, the ash-tray is positioned above the air inlet and the whole system is designed such that when the ash-tray is opened, the air inlet closes automatically.

In this way, when the ash-tray is completely open, the air flux form the air inlet is stopped. When it is desired to have the air inlet operating again, the ash-tray will have to be closed.

For these and other objects and advantages, which will be apparent by the ensuing description, the present invention provides an air inlet for the back seats of a motor vehicle, of the type positioned between the front seats at the level of the seat backs, characterised in that the outer body of said air inlet comprises a seat for accommodating the outer shell of an ash-tray.

In order that the present invention may be well understood there will now be described a preferred embodiment thereof, given by way of example, reference being made to the accompanying drawings, in which:

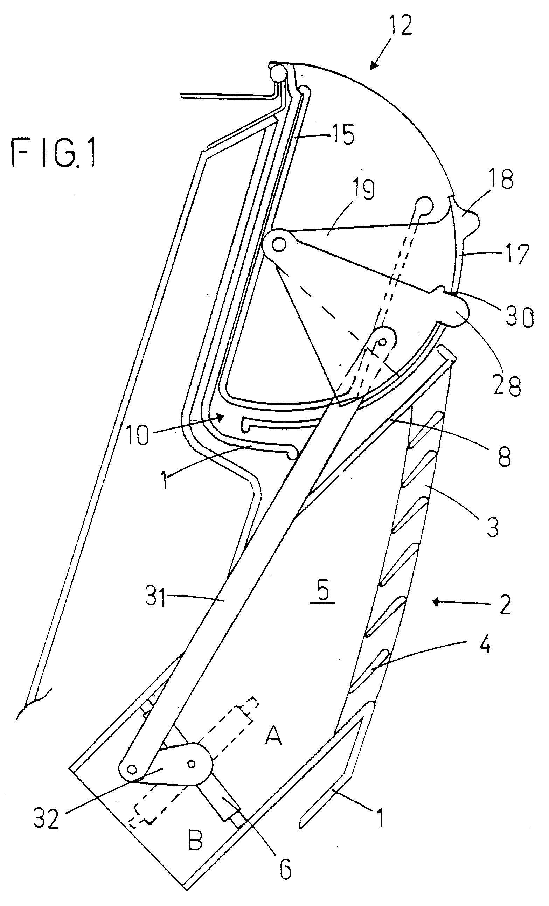

- FIG. 1: is a side sectional view of the air inlet with integrated ash-tray according to the invention;
- FIG. 2: is a section view of a detail of FIG. 1, where the lid of the ash-tray is in a second position;

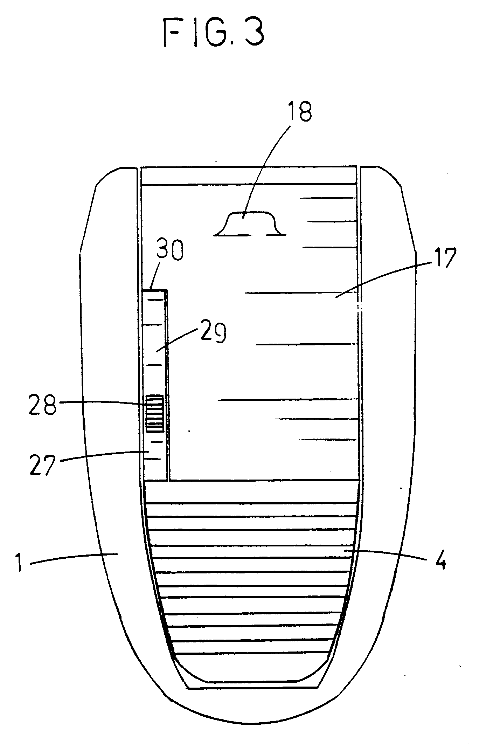

- FIG. 3: is a front view of the air inlet according to the invention; and
- FIG. 4: is a section view of the ash-tray lid showing its connection system and the air inlet control system.

Referring to the drawings, numeral 1 designates the outer body of a air inlet 2 of the type mounted to the central tunnel of a motor vehicle at the level of the front seat back, and which serves the passengers on the back seats.

Fixed in known manner to the body of the air inlet is a grid 3 provided with mobile fins 4. The air inlet has a main air inlet conduit 5 controlled by a valve 6 movable between a fully open position A (shown in dashed line) and a closed position B.

A seat 10 adapted for accommodating an ash-tray designated overall at 12 is fitted above the grid 3.

A receptacle 15 for ash and cigarette ends is located within the seat 10. Receptacle 15 is so shaped as to be withdrawn for emptying and cleaning.

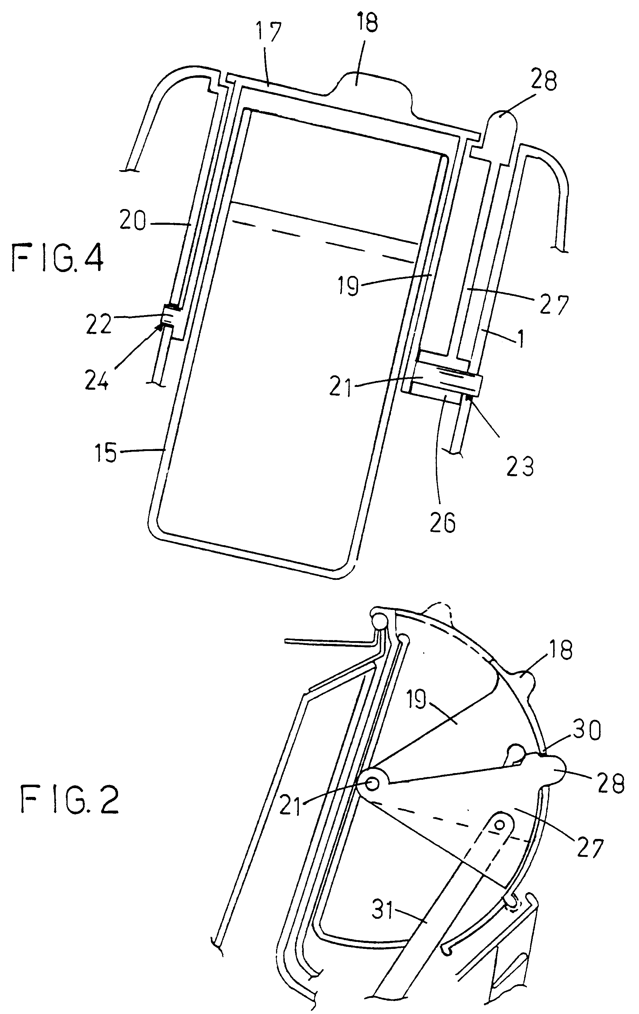

Fitted with a control projection 18 is a lid 17 of hiding kind adapted for rotation on rounded supports 19 and 20 perpendicular thereto. Lid 17 rotates between a closed position (depicted in dashed lines in FIG. 2) in which the receptacle 15 is completely closed, and an open position in which said receptacle is completely uncovered. Obviously, lid 17 can also reach positions intermediate the open and closed end positions. The inner ends of rounded supports 19 and 20 are provided with pins 21 and 22, respectively, rotating in suitable seats 23 and 24 obtained in the body 1.

Pin 21 is longer as the ash-tray as a whole is shifted with respect to the axis of body 1. A bushing 26 rotates on pin 21 between said body 1 and support 19. Bushing 26 is fitted with a member 27 having the shape of a sector of a circle provided with an air inlet control slider 28. Member 27 with slider 28 is free to rotate in a slot 29 defined on one side by body 1, and on the other side by an offset in the ash-tray lid 17. Lid 17 has a full width portion forming a tooth 30 with the limited width portion.

The rounded member 27 is connected with said butterfly valve 6 by means of two connecting rods 31 and 32, such that when the rounded member is rotated by the control slider 28, valve 6 is correspondingly rotated to open/close the air output of the air inlet.

Operation of the air inlet is as follows.

To open the ash-tray with the projection 18, the lid 17 has to be pressed down until it reaches the position shown in FIG. 2. In this position, tooth 30 abuts the slider 28, which is in the full open position of the air inlet.

In proceeding in its opening motion, tooth 30 of the ash-tray lid abuts the slider 28 and rotates it together with support 27, thereby causing valve 6 to close and stop the air flow through the air inlet fins 4.

If the lid of the ash-tray is only partly open, it is possible to have the air inlets open, whereas if the lid is completely opened, the air inlet is closed and the air flow though it is completely interrupted. This prevents the ash in receptacle 15 from being blown into the passenger's cabin. When it is desired to open the air inlet, it is sufficient to lift upwards the control slider 28 which automatically urges the ash-tray lid 17 to its partially open position that does not allow the ash to be blown out of the ash-tray.

## Claims

1. An air inlet (2) for the back seats of a motor vehicle, of the type positioned between the front seats at the level of the seat backs, characterised in that the outer body (1) of said air inlet comprises a seat (10) for accommodating the outer shell of an ash-tray (12).

2. An air inlet (2) as claimed in claim 1, characterised in that the control for opening and closing the air inlet (2) consists of a rounded member (27), having the shape of a sector of a circle, provided with a control slider (28) adapted for rotating on a pin (21) connected to the body (1), said member (27) being connected by connecting rods (31, 32) to a butterfly valve (6) for controlling a main air conduit (5) supplying the air inlet (2).

3. An air inlet (2) as claimed in any of the preceding claims, characterised in that the control for opening and closing the ash-tray is constituted of a projection (18) located on the lid (17) of the ash-tray, said lid (17) being free to rotate on two rounded members (19, 20) pivotally mounted to the outer body (1) of the air inlet (2), said lid being shaped such that it intercepts in its motion said control slider (28) of said rounded member (27) so as to move it or being moved by it.

## Patentansprüche

1. Lufteinlaß (2) für die Rücksitze eines Kraftfahrzeugs des zwischen den Vordersitzen in Höhe der Rücksitze angeordneten Typs,
**dadurch gekennzeichnet, daß**
der Außenkörper (1) des Lufteinlasses eine Aufnahme (10) zur Aufnahme des Außengehäuses eines Aschenbechers (12) aufweist.

2. Lufteinlaß (2) nach Anspruch 1,
**dadurch gekennzeichnet, daß**
die Steuerung zum Öffnen und Schließen des Lufteinlasses (2) aus einem runden Teil (27) besteht, das die Form eines Kreissektors hat, das mit einem Steuerschieber (28) versehen ist, der auf einem Zapfen (21) drehbar ist, der mit dem Körper (1) verbunden ist, und das durch Verbindungsstangen (31, 32) mit einer Drosselklappe (6) zur Steuerung der Hauptluftleitung (5) für die Versorgung des Lufteinlasses (2) verbunden ist.

3. Lufteinlaß nach einem der vorhergehenden Ansprüche
**dadurch gekennzeichnet, daß**
die Steuerung für das Öffnen und Schließen des Aschenbechers aus einem Vorsprung (18) besteht, der am Deckel (17) des Aschenbechers angeordnet ist, wobei der Deckel (17) auf zwei runden Teilen (19, 20) frei drehbar ist, die am Außenkörper (1) des Lufteinlasses (2) schwenkbar gelagert sind, und wobei der Deckel so geformt ist, daß sich seine Bewegungsbahn mit der des Steuerschiebers (28) des runden Teils (27) schneidet, um ihn zu verstellen, oder von ihm verstellt zu werden.

## Revendications

1. Bouche d'entrée d'air (2) destinée aux sièges arrière d'une automobile, du type positionné entre les sièges avant, au niveau des dossiers, caractérisée en ce que le corps extérieur (1) de ladite bouche d'entrée d'air comprend un siège (10) destiné à recevoir l'enveloppe extérieure d'un cendrier (12).

2. Bouche d'entrée d'air (2) selon la revendication 1, caractérisée en ce que la commande d'ouverture et de fermeture de la bouche d'entrée d'air (2) est constituée d'un élément arrondi (27), ayant la forme d'un secteur circulaire, comportant une pièce coulissante de commande (28) conçue pour tourner sur une broche (21) raccordée au corps (1), ledit élément (21) étant raccordé au moyen de tiges de raccordement (31, 32) à une vanne papillon (6) destinée à commander un conduit principal d'air (5) alimentant la bouche d'entrée d'air (2).

3. Bouche d'entrée d'air (2) selon l'une quelconque des revendications précédentes, caractérisée en ce que la commande d'ouverture et de fermeture du cendrier est constituée d'une saillie (18) située sur le couvercle (17) du cendrier, ledit couvercle (17) étant libre de tourner sur deux éléments arrondis (19, 20) montés en pivotement sur le corps extérieur (1) de la bouche d'entrée d'air (2), ledit couvercle ayant une forme telle qu'il intercepte, au cours de son mouvement, ladite pièce coulissante de commande (28) dudit élément arrondi (27) de manière à lui faire subir un déplacement ou à être déplacé sous son influence.
